## Europäisches Patentamt

## European Patent Office

## Office européen des brevets

(19)

(11) Veröffentlichungsnummer: **0 144 982**

**B1**

(12)

# EUROPÄISCHE PATENTSCHRIFT

(45) Veröffentlichungstag der Patentschrift:
08.03.89

(21) Anmeldenummer: 84114860.4

(22) Anmeldetag: 06.12.84

(51) Int. Cl.⁴: **B 23 K 1/08**

(54) Vorrichtung zum Verlöten einer Wicklung mit dem Kollektor einer elecktrischen Maschine.

(30) Priorität: 09.12.83 BG 63386/83

(43) Veröffentlichungstag der Anmeldung:
19.06.85 Patentblatt 85/25

(45) Bekanntmachung des Hinweises auf die Patenterteilung:
08.03.89 Patentblatt 89/10

(84) Benannte Vertragsstaaten:
AT BE CH DE FR GB IT LI LU NL SE

(56) Entgegenhaltungen:
DE-A-3 101 242
GB-A-2 051 648

(73) Patentinhaber: INSTITUT PO METALOSNANIE I TECHNOLOGIA NA METALITE, Tschapaev-Strasse No. 53, Sofia (BG)

(72) Erfinder: Mintchev, Pavel Markov, 7, T. Petrov Strasse, B-1513 Sofia (BG)
Erfinder: Angelov, Mihail Hristov, 47, P. Enev Strasse, B-1126 Sofia (BG)
Erfinder: Hristov, Hristomir Denev, Komplex Mladost- 3 Block 317, B-1112 Sofia (BG)
Erfinder: Balinov, Stoimen Stoyanov, Komplex Lenin Block 25, B-1504 Sofia (BG)
Erfinder: Yordanov, Nikolay Vassilev, 11, K. Veskova Strasse, B-1111 Sofia (BG)

(74) Vertreter: Finck, Dieter, Patentanwälte v. Füner, Ebbinghaus, Finck Mariahilfplatz 2 & 3, D-8000 München 90 (DE)

## Beschreibung

Die Erfindung betrifft eine Vorrichtung zum Verlöten einer Wicklung mit dem Kollektor einer elektrischen Maschine, mit einer Wanne für ein Bad aus geschmolzenem Lot und Elektrowiderstands-Heizgeräten, mit einer einphasigen magnetohydrodynamischen Pumpe, welche aus einem von einer Wicklung umgebenen Magnetkern und einer strömungsbildenden Einheit aus ferromagnetischem Material besteht, die eine Basis, einen hohlen Zylinder mit kegelförmiger innerer unterer Oberfläche und radialen Löchern oberhalb der kegelförmigen Oberfläche und einen Begrenzungsring in ihrem oberen Teil aufweist und mit einer konzentrisch zur Basis angeordneten auswechselbaren Düseneinheit, die aus einer Hülse mit einem abgeschrägten oberen Ende besteht, welche starr in einer Buchse befestigt ist.

Es ist bereits eine Vorrichtung zum Verlöten einer Wicklung mit dem Kollektor einer elektrischen Maschine bekannt (BG-PS-32 241), welche eine einphasige magnetohydrodynamische Pumpe aufweist, die einen Metallkern umgeben von einer Wicklung, eine strömungsbildende Einheit aus ferromagnetischem Material und eine Wanne mit einem Bad aus geschmolzenem Lot sowie Elektrowiderstands-Heizgeräte aufweist. Die strömungsbildende Einheit ist unterhalb der Wanne angeordnet und mit der Wanne über Einlaßkanäle und einen an eine zentrale Öffnung im Boden der Wanne angeschlossenen Auslaßkanal verbunden. Oberhalb der zentralen Öffnung im Boden der Wanne ist eine Basis befestigt, die einen hohlen Zylinder mit einer kegelförmigen inneren unteren Oberfläche aufweist. Oberhalb der kegelförmigen Oberfläche sind radiale Öffnungen angeordnet. Im oberen Teil der Basis sind mindestens drei senkrechte Kanäle und ein Begrenzungsring vorgesehen. Konzentrisch zur Basis ist eine auswechselbare Düseneinheit angeordnet, die aus einer Hülse mit abgeschrägtem oberem Ende besteht, welche in einer Buchse starr befestigt ist, deren untere Oberfläche kegelförmig ausgebildet ist und die gleiche Neigung wie die innere untere Oberfläche des hohlen Zylinders hat. Zwischen der Hülse und der Buchse besteht so ein ringförmiger Kanal, der die Strömung des geschmolzenen Lots ausbildet. Diese Vorrichtung ist zum Verlöten von Kollektoren mit unterschiedlichen Durchmessern universell einsetzbar.

Ein Nachteil dieser Vorrichtung resultiert aus einer unzulässigen Belastung der auswechselbaren Düseneinheit und des Bodens der Wanne, infolgedessen sie bei Rotoren mit großer Masse nicht eingesetzt worden kann. Nachteilig sind außerdem die hohen Wärmeverluste infolge der Anordnung der strömungsbildenden Einheit außerhalb der Wanne, mit der sie über äußere Leitungen mit großer wärmeableitender Oberfläche verbunden ist.

Der Erfindung liegt die Aufgabe zugrunde, die Vorrichtung der eingangs genannten Art so auszubilden, daß bei Erhaltung ihres universellen Einsatzes auch ein Verlöten der Wicklung mit dem Kollektor von Rotoren mit großer Masse bei herabgesetzten Wärmeverlusten möglich ist.

Diese Aufgabe wird bei der eingangs genannten Vorrichtung zum Verlöten einer Wicklung mit dem Kollektor einer elektrischen Maschine dadurch gelöst, daß die Wanne auf dem Magnetkern angeordnet ist, daß auf dem Boden der Wanne ein zusätzlicher hohler Magnetkern starr befestigt ist, der eine Verlängerung des Magnetkerns bildet, und daß die Hülse mit stufenförmiger Form mit ihrem äußeren Ansatz auf dem zusätzlichen hohlen Magnetkern liegt, zu dem konzentrisch die strömungsbildende Einheit angeordnet ist, die aus einem zylindrischen Teil, der die Basis mit dem Begrenzungsring trägt, und aus einer Scheibe besteht, die mit Distanzeinsatzstücken aus ferromagnetischem Material am Boden der Wanne starr befestigt ist.

Die Vorteile der erfindungsgemäsen Vorrichtung bestehen darin, daß Verlöten der Wicklung mit dem Kollektor von Rotoren mit großer Masse möglich ist, wobei die Universalität der Vorrichtung erhalten bleibt und die Wärmeverluste und der Elektroenergieverbrauch reduziert sind. Dies wird erreicht durch die Anordnung der strömungsbildenden Einheit in der Wanne, wodurch äußere Leitungen entfallen können.

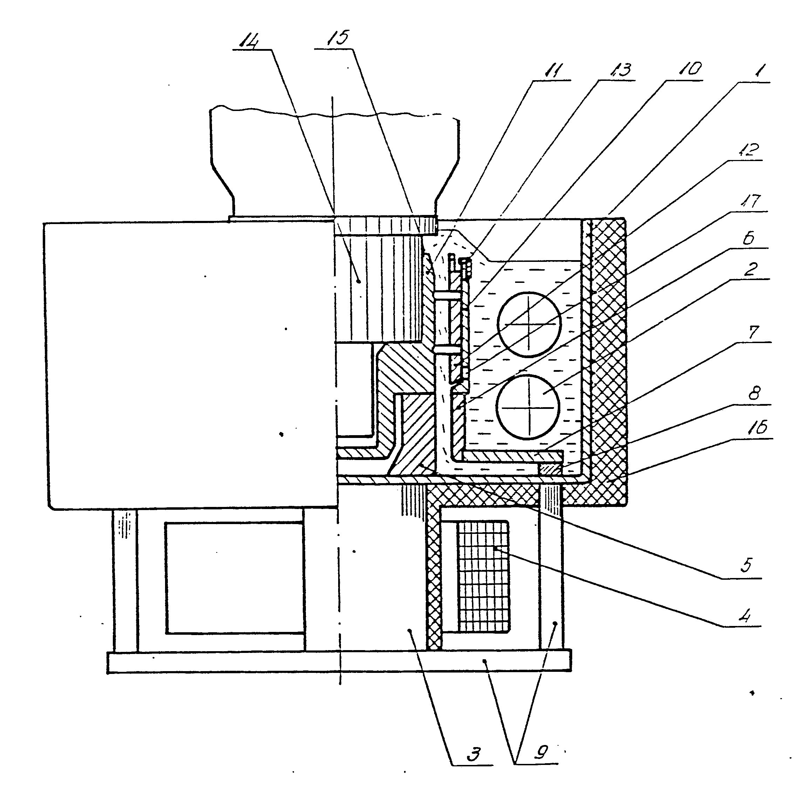

Anhand einer Zeichnung, die in einer axial geschnittenen Seitenansicht ein Ausführungsbeispiel der Vorrichtung in der Arbeitsstellung zeigt, wird die Erfindung näher erläutert. Wie in der Zeichnung gezeigt, ist an einer Wanne 1 mit einem Bad aus geschmolzenem Lot und mit Elektrowiderstands-Heizgeräten 2 eine einphasige magnetohydrodynamische Pumpe montiert. Die Pumpe besteht aus einem Magnetkern 3, der von einer Wicklung 4 umgeben und unterhalb der Wanne 1 angeordnet ist, aus einem zusätzlichen hohlen Magnetkern 5, der auf dem Boden der Wanne 1 angeordnet ist, aus einer strömungsbildenden Einheit, die einen zylindrischen Teil 6 und eine Scheibe 7 aufweist, die am Boden der Wanne 1 mit Distanzeinsatzstücken 8 aus ferromagnetischem Material befestigt und konzentrisch zum zusätzlichen hohlen Magnetkern 5 angeordnet ist, und aus äußeren Magnetkernen 9, welche die Scheibe 7 der strömungsbildenden Einheit mit dem Magnetkern 3 verbinden. Am oberen Ende der strömungsbildenden Einheit ist eine Basis 10 festgelegt, in welcher eine auswechselbare Düseneinheit angeordnet ist, die aus einer Hülse 11 mit stufenförmiger Form und abgeschrägtem oberem Ende und einer Buchse 12 besteht, die starr miteinander verbunden sind. Im unteren Teil der Basis 10 sind radiale Löcher 17 gebohrt. Im oberen Teil der Basis 10 ist mittels einer leicht lösbaren Verbindung ein Begrenzungsring 13 befestigt, der die Buchse 12 in ihrer oberen Stellung fixiert. Die Hülse 11 sitzt mit einem äußeren Ansatz auf dem zusätzlichen hohlen Magnetkern 5.

Die Vorrichtung arbeitet folgendermaßen:

Das Schmelzen des Lots erfolgt durch die Elektrowiderstands-Heizgeräte 2 und auf dem Induktionsweg über die einphasige magnetohydrodynamische Pumpe. Nach dem Schmelzen des Lots verschieben die hydrodynamischen Kräfte die auswechselbare Düseneinheit in eine obere Position bis zum Begrenzungsring 13. Das geschmolzene Lot, das vom Boden der Wanne 1 angesaugt wird, fließt durch die strömungsbildende Einheit und gelangt durch die Löcher 17 in den unteren Teil der Basis 10 in der Wanne 1.

Beim Einlegen eines Rotors erstreckt sich der Kollektor 14 in die Hülse 11 bis zum Anschlag an ihrem inneren Ansatz und verschiebt die Düseneinheit abwärts, bis die Hülse 11 mit dem zusätzlichen hohlen Magnetkern 5 in Berührung kommt, wobei die Buchse 12 die Löcher 17 der Basis 10 verschließt. Das Abdichten zwischen dem Kollektor 14 und der Hülse 11 erfolgt durch einen Dichtungsring 15. Das von der strömungsbildenden Einheit verschobene geschmolzene Lot fließt nun durch die Düseneinheit, bildet eine ringförmige Strömung und überfließt die Zungen des Kollektors 14, wobei es diese erwärmt und die Leiter der Wicklung mit den Plättchen des Kollektors 14 verlötet.

Bei der Herausnahme des Rotors bewegt sich die Düseneinheit aufwärts bis sie mit dem Begrenzungsring 13 in Berührung kommt. Dabei fließt das geschmolzene Lot wieder durch die Löcher 17 der Basis 10.

Wenn ein Kollektor mit anderem Durchmesser gelötet werden soll, wird der Begrenzungsring 13 herausgenommen und die Düseneinheit durch eine für diesen Durchmesser passende ersetzt.

Das Gewicht des Rotors wird von der Hülse 11, dem zusätzlichen hohlen Magnetkern 5 und dem Magnetkern 3 aufgenommen. Zur Reduzierung der Wärmeverluste sind die Wanne 1 und der Magnetkern 3 mit einer Wärmeisolation 16 überzogen.

## Patentanspruch

Vorrichtung zum Verlöten einer Wicklung mit dem Kollektor (14) einer elektrischen Maschine, mit einer Wanne (1) für ein Bad aus geschmolzenem Lot und Elektrowiderstands-Heizgeräten (2), mit einer einphasigen magnetohydrodynamischen Pumpe, welche aus einem von einer Wicklung (4) umgebenen Magnetkern (3) und einer strömungsbildenden Einheit aus ferromagnetischem Material besteht, die eine Basis (10), einen hohlen Zylinder mit kegelförmiger innerer unterer Oberfläche und radialen Löchern (17) oberhalb der kegelförmigen Oberfläche und einen Begrenzungsring (13) in ihrem oberen Teil aufweist und mit einer konzentrisch zur Basis (10) angeordneten auswechselbaren Düseneinheit, die aus einer Hülse (11) mit einem abgeschrägten oberen Ende besteht, welche starr in einer Buchse (12) befestigt ist,

dadurch gekennzeichnet,

daß die Wanne (1) auf dem Magnetkern (3) angeordnet ist, daß auf dem Boden der Wanne (1) ein zusätzlicher hohler Magnetkern (5) starr befestigt ist, der eine Verlängerung des Magnetkerns (3) bildet, und daß die Hülse (11) mit stufenförmiger Form mit ihrem äußeren Ansatz auf dem zusätzlichen hohlen Magnetkern (5) liegt, zu dem konzentrisch die strömungsbildende Einheit angeordnet ist, die aus einem zylindrischen Teil (6), der die Basis (10) mit dem Begrenzungsring (13) trägt, und aus einer Scheibe (7) besteht, die mit Distanzeinsatzstücken (8) aus ferromagnetischem Material am Boden der Wanne (1) starr befestigt ist.

## Claim

Device for soldering a coil to the collector (14) of an electrical machine, having a tub (1) for a bath of molten solder and electrical-resistance heating devices (2), with a single-phase magneto-hydrodynamic pump which comprises a magnetic core (3) surrounded by a coil (4) and a flow-forming unit of ferromagnetic material which has a base (10), a hollow cylinder with a conical inner lower surface and radial apertures (17) above the conical surface and a limiting ring (13) in its upper portion, and with an exchangeable nozzle unit arranged concentrically to the base (10), this nozzle unit comprising a sleeve (11) with a chamfered upper end which is rigidly secured in a bushing (12), characterised in that the tub (1) is arranged on the magnetic core (3), in that on the base of the tub (1) there is rigidly secured an additional hollow magnetic core (5) which forms an extension of the magnetic core (3), and in that the sleeve (11) with step-like form lies with its outer abutment on the additional hollow magnetic core (5), to which the flow-forming unit is concentrically arranged, this unit comprising a cylindrical portion (6) which carries the base (10) with the limiting ring (13), and a disc (7), which is rigidly secured on the base of the tub (1) with spacer inserts (8) of ferromagnetic material.

## Revendication

Dispositif destiné à souder un enroulement au collecteur (14) d'une machine électrique, comprenant un bac (1) destiné à contenir un bain de soudure fondue et des appareils de chauffage électrique à résistance (2), une pompe magnétohydrodynamique monophasée, qui est composée d'un noyau magnétique (3) entouré d'un enroulement (4) et d'une unité de canalisation de l'écoulement en matière ferromagnétique, laquelle comprend une base (10), un cylindre creux muni d'une surface intérieure inférieure conique et de trous radiaux (17) situés au-dessus de la surface conique ainsi qu'une bague d'arrêt (13) dans sa partie supérieure, et une unité buse interchangeable, disposée concentriquement à la base (10) et composée d'une douille (11) munie d'une extrémité supérieure chanfreinée, qui est fixée rigidement dans un manchon (12), caractérisé en ce que le bac (1) est disposé sur le noyau magnétique (3), en ce que, sur le fond du bac (1), est fixé rigidement un noyau magnétique supplémentaire creux (5) qui forme un prolongement du noyau magnétique (3) et en ce que la douille (11), qui est de forme étagée, s'appuie par son épaulement extérieur sur le noyau magnétique supplémentaire creux (5) vis-à-vis duquel est disposée concentriquement l'unité de canalisation de l'écoulement qui est elle-même composée d'une partie cylindrique (6) qui porte la base (10) munie de la bague d'arrêt (13) et d'un disque (7) qui est fixé rigidement au fond du bac au moyen d'entretoises (8) en matière ferromagnétique.